# EUROPEAN PATENT APPLICATION

(11) **EP 2 871 600 A1**
(43) Date of publication of application: **13.05.2015**
(21) Application number: 14191717.9
(22) Date of filing: 04.11.2014
(51) Int. Cl.: G06Q 10/06

(54) **Data link module**

(30) Priority: 06.11.2013 GB 201319582
(71) Applicant: Tensator Limited, Buckinghamshire MK14 6TS (GB)
(72) Inventor: Martins, Steven, Milton Keynes, Buckinghamshire MK14 6TS (GB)
(74) Representative: Somervell, Thomas Richard

(57) **Abstract**

An interface module configured to provide codes to be used in determining an availability status of service points, wherein the module receives status data from a secure transaction system and selects a predetermined code or generates a code in accordance with predefined syntax, the code indicative of the availability of the service points and relays the selected code to a retail customer queue management system for determining the availability of a service point.

## Description

### Field of the Invention

The present invention relates to customer queue management systems such as automated call forward systems. More particular, the present invention relates to an apparatus and method for communicating information indicative of the availability status of a service point to queue management systems.

### Background

Within the retail environment there is an on-going desire to better manage customer waiting times in order to reduce customer frustration. Another desire is to improve usage rates of service points (such as checkouts). Call forward systems are used in queue management because they allow service point utilisation to be improved, which in turn allows waiting times to be managed more efficiently.

A weakness of call forward systems is their reliance on a determination as to whether or not a point of sale is available to receive another customer. Traditionally, the determination follows human assessment, such as by staff operating the point of sale or by supervising staff.

Automated call forward systems are able to derive parameters indicative of the presence of a customer in a queue or at a service point. European Patent Publication EP 2,5791,93 A1 by the Applicant of the present application describes a sensor system for determining parameters indicative of the presence of a customer at a checkout. Such parameters can be employed in a determination whether or not to call forward the next customer in a queue.

The present invention has been devised with a view to further improve queue management systems.

### Summary of the Invention

In accordance with a first aspect of the present invention, there is provided an interface module as defined in claim 1. The interface module is configured to provide codes to be used in determining an availability status of one or more service points, wherein each of the one or more service points may be in one of a plurality of conditions, including at least an available condition and an unavailable condition. The module comprises an input interface and an output interface. The output interface is configured for wireless or wired communication with a retail customer queue management system for channelling customers to the one or more service points. The input interface is configured to be linked to a secure transaction system. The secure transaction system collects transaction data from the one or more service points. The input interface is configured to receive status data indicative of the condition of the one or more service points based on the transaction data of the secure transaction system. The interface module is configured to select one of a number of predetermined codes or generate a code in accordance with predetermined syntax based on said status data. The output interface is configured to provide said predetermined code to the retail customer queue management system.

Automated call forward systems require a sensor system that provides the data for the determinations about the presence of customers and the availability of service points. The inventors have observed that secure transaction systems that are used in the retail environment handle transaction or payment data that has potential for improving the determination of the availability status of service points. In this context, it is understood that the term 'secure transaction system' relates to systems handling sensitive data such transaction and payment details.

The information handled within a secure transaction system typically contains information related to the initiation or the conclusion of a financial transaction. For instance, the initiation of a financial transaction may indicate that a service point is about to be vacated by a customer. The conclusion of a financial transaction may indicate that a service point is available to receive another customer. Such information can be used in determining whether or not a customer should be called forward from a queue to a service point, and for determining when the call forward indication should be provided or to which service point a customer should be guided.

However, for security reasons, system administrators are reluctant to allow any noncritical access to secure transaction systems. Therefore, access to secure transaction systems is restricted. Data links into secure transaction systems are limited to system-critical connections which form part of a closed system. A connection into a secure transaction system would require additional security measures to ascertain the integrity of the connection, comprehensive audit of the security measures, considerations of updates and transition testing for upgrades.

The costs for such additional security measures render the option of connecting into a secure transaction system unviable. Therefore, secure transaction systems were hitherto not considered as a source of information that could be used in queue management systems. As a result, queue management systems are installed as independent systems, using their own sensing means and remaining isolated from secure transaction systems.

The inventors have devised a system that allows information that is relevant for a queue management system to be retrieved from a secure transaction system, to make this information available for the determinations made by the queue management system, without compromising the security of the secure transaction system.

To this end, an interface module is provided which is configured to relay data only in accordance with a strictly defined protocol. By way of this arrangement, there is no risk of a route for a potential attack vector being opened up into the secure transaction system via the interface module.

For reasons of security and accreditation, a wireless connection from the interface module to the queue management system is preferred, because this reduces the opportunities for physically tampering with a connection. However, in embodiments of the invention, a wired connection may be used to link the interface module to the queue management system.

If the secure transaction system is not set up to provide status data suitable for processing by the interface module, the secure transaction system would have to be configured to provide status data. This can be done retrospectively under supervision of authorised personnel. The configuration of a secure transaction system to provide status data may be facilitated by providing an application program interface (API).

The setup also allows the dissemination of the status data from the secure transaction system beyond the interface module to be limited. Information communicated from the interface module to the queue management system is provided in the form of a code that is unsuitable for revealing security-relevant aspects of the data contained in the transaction system. Consequently, the status data provided by the secure transaction system is not communicated directly to the queue management system.

In accordance with an embodiment, the code is indicative of one or more of a service point identifier, a zone of the retail environment with which a service point is associated, an indication of the transmission frequency or channel to be used, and an indication of the availability status of a transaction system at a service point.

The availability status may indicate that a service point is in an available condition to receive a customer, or in an unavailable condition. The availability status may indicate another operational condition. Operational conditions may include, for instance, the method(s) of payment that can be processed by a particular service point.

For instance, the availability status may indicate that a particular service point can only conduct cash transactions. In that case the status data may be used to provide an indication to customers, e.g. via display of a "Cash only" message.

It is understood that by code syntax a code structure is meant which comprises locations for one or more of a service point identifier, zone identifier, transmission frequency or channel, or availability status. For instance, the code may be presented in the form of a string with a first fixed number of bytes for a service point identifier and a byte for the availability status.

The code transmitted from the interface module to the customer queue management system may comprise an identifier of a service point to which the transaction relates. This allows the queue management system to allocate the status code to a specific service point.

Alternatively or additionally, the code may comprise an identifier signifying a zone of the retail environment with which the service point is associated, or in which the service point is located. This allows the queuing management system to allocate the status code to a group of service points or a specific zone in the retail environment.

The code may comprise an indication of whether or not a pay station is in use at a service point, or whether or not transaction data or payment data are being processed. The indication may signify, for a service point or zone, whether a pre-payment transaction was commenced or concluded, or whether a payment process was initiated, successfully concluded, or unsuccessfully concluded.

It will be understood that for practical purposes, the codes do not reveal any more information than could readily be gathered from inspecting the service points on site. The information provided by the codes is sufficient to improve the automation of a queue management system, but does not pose a risk to the security of the transaction data or financial data handled by the secure transaction system.

Further, the codes may be encrypted. Encryption impedes attempts to intercept and decipher the information content of the codes.

In accordance with an embodiment, the interface module further comprises a receiver for wireless or wired communication with the retail customer queue management system.

The receiver allows requests to be made by the queue management system to the interface module. Thereby, the stream of information from the interface module can be limited to instances when a code is requested by the queue management system. This allows requests to be made by the queue management system for a particular service point or zone.

In accordance with an embodiment, the interface module is configured to be linked to the secure transaction system by a secure connection. The interface module may be configured to be physically integrated with the secure transaction system. The interface module may be configured to be physically integrated with a service point. A separate interface module may be installed at one or more service points or at each of the service points. The input interface may be configured to be linked to the secure transaction system or to the one or more service points via an encrypted protocol or via an unencrypted protocol.

These measures limit the options for unauthorised interception of the status data.

### Drawings

Specific embodiments of the invention are described with reference to the Figures, in which:
Fig. 1 is a diagram of a retail environment in which an interface module in accordance with the invention is installed; and
Fig. 2 is a schematic diagram of an interface module in accordance with the invention.

### Description

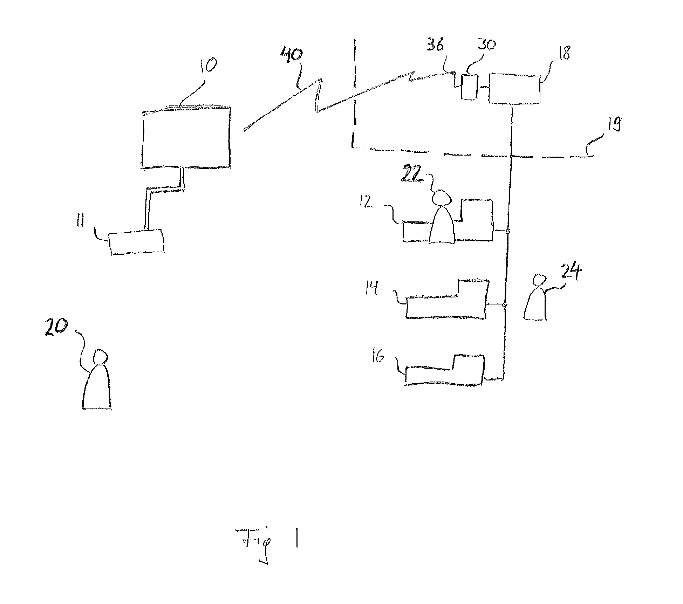

Figure 1 shows, schematically, a queue management system 10. The queue management system is associated with a plurality of service points 12, 14, 16. The queue management system 10 comprises a sensor system 11 for determining whether or not a customer is present at the head of a queue. As shown in Figure 1, a customer 20 is waiting to be called to one of the service points 12, 14, 16. The presence of the customer 20 can be detected by the sensor system 11 of the queue management system 10. The sensor system 11 may further comprise sensors for monitoring the presence of a customer at the service points.

Service point 12 is in an unavailable condition because it is occupied by a customer 22. Service point 14 is in an available condition because customer 24 has just left service point 14 and no other customer has been called forward to service point 14. Service point 16 is not occupied and is in an available condition.

The queue management system 10 is set up to make a determination as to whether or not a customer waiting at the head of the queue should be called to one of the service points. Conventionally, the determination may be based on status data provided by an operator of a service point or a sensor system of the queue management system.

Each service point 12, 14, 16 is connected to a secure transaction system 18 which processes transaction and payment data. The secure transaction system 18 may be embodied as a purposefully modified personal computer or server that is securely connected to each of the service points 12, 14, 16. The personal computer or server is located at a restricted access location so that access to the secure transaction system 18 is limited to authorised personnel. This physical separation is indicated in Figure 1 by a dashed barrier 19 separating the secure transaction system 18 from the queue manage system 10 and the service points 12, 14, 16. The secure arrangement is in place because of the sensitivity of the financial information.

With regard to Figure 1, the transaction system 18 processes transaction data and payment data for service point 12 as the customer 22 is conducting his transaction. The transaction system 18 has recently finalised the processing of the transactions for service point 14 as customer 24 has concluded his transaction. Figure 1 shows that customer 24 has left the service point 14. Note that in practice, the customer 24 may still be present at the service point, but the conclusion of the transaction indicates that the service point is ready to receive another customer.

In accordance with the invention, the status data from the secure transaction system 18 is to be used for the call-forward determinations made by the queue management system.

To this end, one or more interface modules 30 are connected to the secure transaction system 18. As shown in Figure 1, the interface module 30 is located within a restricted access area. For instance, the secure transaction system 18 and the interface module may be located in the same room.

Additionally or alternatively, several interface modules 30 may be installed, one each at one or more of the service points 12, 14, or 16. It will be understood that the service points comprise restricted areas and that the interface modules will preferably be installed in a restricted area of the service points.

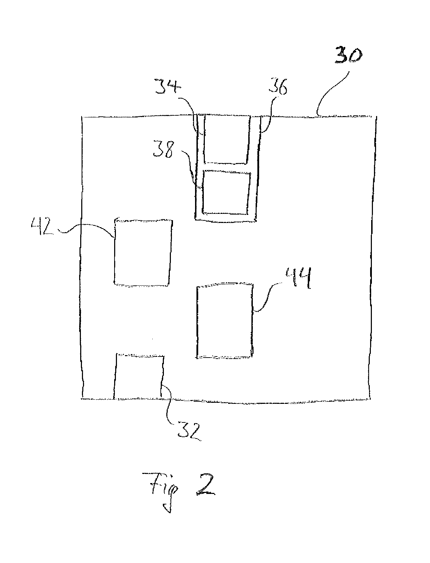

Figure 2 shows components of the interface module 30. The interface module 30 comprises an input interface 32 which allows wired connection to the secure transaction system 18. For instance, the input interface 32 may be provided by a RS232 or USB compliant connection which can connect to an USB port of the personal computer representing the processing unit of the secure transaction system 18.

The interface module 30 further comprises an output interface 34. The output interface comprises an antenna 36. The antenna 36 may be integral with the interface module 30. Alternatively or additionally, an antenna port may be provided, such as a U.FL or MHF connector for connecting to an external antenna, or any other output port capable of wireless or wired communication.

The output interface 34 is configured for wireless communication via a wireless communication channel 40 with the queue management system 10, so that the interface module 30 can communicate status codes to the queue management system 10. Alternatively, a wired communication channel 40 may be provided.

In an embodiment, a receiver 38 is provided in addition to output interface 34. For instance, the antenna 36 may also act as the receiver 38. In this case, the firmware is configured to allow only a limited number of predefined codes, or only codes conforming to specifically defined code syntax, to be received via the receiver 38.

Figure 2 further shows a processor 42 and a memory 44. The interface module 30 is operated by an embedded processor running dedicated firmware, for instance an EEPROM. The firmware protocol is restrictive and allows only a limited number of predefined codes to be processed. As such, the firmware operates as a gatekeeper for any signals. Signals not conforming to a specific, predefined code or code syntax are ignored.

The processor 42 is configured to process status data received from the secure transaction system 18. This may include establishing a service point identifier of the service point to which the status data relates, and determining the condition of service point. The processor 42 is configured to select one of a number of predetermined codes based on the determined condition. Once an appropriate code is selected or a code in accordance with the predefined code syntax has been generated, the processor 42 instructs the output interface 32 to transmit the code to the queue management system 10.

Further, the interface module 30 comprises a memory 44. The memory 44 may be used to store a log of status data. This facilitates the handling of status data for a large number of service points. The storage log also allows transmission of codes to be carried out independent of the incoming status data. For instance, when status data is received from the secure transaction system 18, the processor 42 may make an update to the condition of one or more of the service points, and store this information, such that the appropriate, up-to-date code may be transmitted in response to a request by the queue management system 10.

In order to cooperate with the interface module 30, the secure transaction system 18 is programmed to generate status data from the transaction and payment information. The status data is data relevant to the determinations to be made by the queue management system 10 but does not contain any sensitive transaction or financial data. For instance, the status data may indicate that a financial transaction was concluded at the service point 14, but it will not contain information about the amount of money transferred during the transaction or an identification of the person authorising the transaction. As another example, the status data may indicate that a particular service point can only conduct cash transactions. This information may be used for informing a queuing customer, for instance by displaying a "cash only" indication.

In operation, the secure transaction system 18 generates status data derived from the transaction data and communicates the status data via the input interface 32 to the interface module 30. The interface module 30 then selects one of a number of predetermined codes that reflects the status data, or generates a code in accordance with predefined code syntax. The selected or generated code is then communicated to the queue management system 10 via the output interface 34 and the wireless communication channel 40.

Because the queue management system 10 is not directly connected to the secure transaction system 18, the risk assessment for the secure transaction system 18 need only consider the possibilities for accessing the interface module 30. If the interface module 30 is located in an area that is equally secure as the restricted area of a service point or as the location of the processing unit of the secure transaction system 18, then the risk of physical tampering is the same. If, for instance, and application program interface is required to configure the secure transaction system for generating appropriate status messages, the requirement for a risk assessment is limited to the API.

The codes transmitted via the wireless communication channel 40, or via a wired channel 40, are degenerate and thereby impede any conclusion to be made about the transaction data from which they are derived. This further improves the security of the system.

The receiver 38 may allow the queue management system 10 to make requests for status updates to the interface module, for instance to request the current status of specific service points or to alter the number of status messages for a given time.

It is understood that there is no protocol set up on the interface module 30 that allows arbitrary data to be transmitted across the interface module 30, because data is only relayed if it conforms to a predefined code or syntax. As such, there is no access route for malware via the interface module 30, because the executable code on the interface module 30 cannot be modified via the input interface 32, the output interface 34 or via the receiver 38. Therefore, the interface module does not provide an entry port into the secure transaction system 18.

By way of the invention, data that are suitable for improving the determinations to be made by a queue management system 10 and that are contained within the secure transaction system 18 can be made available.

It is understood that the queue management system 10 is configured to receive and interpret the status codes provided by the interface module 30 via the wireless or wired communication channel 40. In systems using a plurality of interface modules 30, for instance for each service point, the queue management system 10 is configured to receive status codes from one or more of the plurality of interface modules 30.

In embodiments, the data made accessible by the invention may allow an electronic call forward system to be provided that does not require dedicated sensors at service points.

## Claims

1. An interface module configured to provide codes to be used in determining an availability status of one or more service points, wherein each of the one or more service points may be in one of a plurality of conditions, including at least an available condition and an unavailable condition, the module comprising an input interface and an output interface; wherein
the output interface is configured for wireless or wired communication with a retail customer queue management system for channelling customers to the one or more service points;
the input interface is configured to be linked to a secure transaction system, the secure transaction system collecting transaction data from the one or more service points;
the input interface is configured to receive status data indicative of the condition of the one or more service points based on the transaction data of the secure transaction system;
the interface module is configured to select one of a number of predetermined codes or to generate a code in accordance with predefined syntax based on said status data; and wherein
the output interface is configured to provide said predetermined code to the retail customer queue management system.

2. The interface module of claim 1, wherein the code is indicative of one or more of a service point identifier, a zone of the retail environment with which a service point is associated, an indication of the transmission frequency or channel, and an indication of the availability status of a transaction system at a service point.

3. The interface module of claim 1 or claim 2, wherein the availability status includes information about an operational condition of a service point.

4. The interface module of any one of the preceding claims, wherein the code is encrypted.

5. The interface module of any one of the preceding claims, further comprising a receiver for wireless or wired communication with the retail customer queue management system.

6. The interface module of any one of the preceding claims, wherein the input interface is configured to be linked to the secure transaction system by a secure connection.

7. The interface module of any one of the preceding claims, wherein the input interface is configured to be physically integrated with the secure transaction system.

8. The interface module of any one of the preceding claims, wherein the input interface is configured to be linked to the secure transaction system via an encrypted protocol.

9. The interface module of any one of the preceding claims, wherein the secure transaction system is an EPOS system.

10. The interface module of any one of the preceding claims, wherein the retail customer queue management system comprises a call forward system.

11. The interface module of any one of the preceding claims, wherein the retail customer queue management system is configured to provide an output indicative of estimated waiting times.

12. A method of determining an availability status of one or more service points in a retail customer queue management system for channelling customers to the one or more service points, wherein each of the one or more service points may be in one of a plurality of conditions, including at least an available condition and an unavailable condition, the method comprising:
providing an interface module comprising an input interface and an output interface,
establishing a wireless or wired communication channel, via the output interface, between the interface module and the retail customer queue management system;
linking, via the input interface, the interface module to a secure transaction system, the secure transaction system collecting transaction data from the one or more service points;
receiving, via the input interface, into the interface module status data indicative of the condition of the one or more service points based on the transaction data of the secure transaction system,
using the interface module to select one of a number of predetermined codes or to generate a code in accordance with predefined syntax based on said status data;
providing, via the output interface, said predetermined code to the retail customer queue management system.

13. The method of claim 12, further comprising a step of providing, with the code, an indication of one or more of a service point identifier, a zone of the retail environment with which a service point is associated, an indication of the transmission frequency or channel, and an indication of the availability status of a transaction system at a service point, and/or providing information about an operational condition of a service point.

14. The method of claim 12 or claim 13, further comprising a step of encrypting the code within the interface module prior to providing the code to the retail customer queue management system.

15. The method of any one of claims 12 to 14, further comprising a step of providing, via the retail customer queue management system, an output indicative of estimated waiting times.
